# EUROPÄISCHE PATENTSCHRIFT

(11) **EP 1 679 216 B1**
(45) Veröffentlichungstag und Bekanntmachung des Hinweises auf die Patenterteilung: **06.08.2008**
(21) Anmeldenummer: 05028583.2
(22) Anmeldetag: 28.12.2005
(51) Int. Cl.: B60J 9/02, F41H 5/22

(54) **Dichtungsvorrichtung für eine Ein-Ausstiegsluke an einem Kampffahrzeug**
Sealing device for a hatch cover for a combat vehicle
Dispositif d'étanchéité pour un panneau de fermeture du trou d'homme d'un véhicule de combat

(30) Priorität: 07.01.2005 DE 202005000199 U
(43) Veröffentlichungstag der Anmeldung: 12.07.2006
(73) Patentinhaber: Krauss-Maffei Wegmann GmbH & Co. KG, 80997 München (DE)
(72) Erfinder: Fehr, Michael, 34590 Wabern (DE)
(74) Vertreter: Feder, Wolf-Dietrich

(56) Entgegenhaltungen:
- EP-A- 0 428 953
- DE-A1- 3 305 882
- DE-U1- 20 316 836
- US-A- 652 462
- US-A- 2 565 856

## Beschreibung

Die Erfindung betrifft eine Dichtungsvorrichtung für eine Ein-Ausstiegsluke an einem Kampffahrzeug mit den Merkmalen aus dem Oberbegriff des Patentanspruchs 1.

Dichtungsvorrichtungen für Ein-Ausstiegsluken an Kampffahrzeugen sind an sich bekannt. Eine solche Dichtungsvorrichtung für ein Luke wird beispielsweise in DE 20316836 beschrieben. Die dort beschriebene Ein-Ausstiegsluke weist einen Lukendeckel auf, welcher oberhalb des oberen Randes der Lukenöffnung angeordnet ist und zum Öffnen und Schließen parallel zur Schließebene der Luke verschiebbar ist. Ferner weist die Ein-Ausstiegsluke eine Dichtungsvorrichtung mit einem Dichtungsträger und einem Dichtungsring auf, der so in Richtung des Lukendeckels bewegt wird, dass der obere Rand des Dichtungsringes an dem Lukendeckel anliegt. Ferner sind mehrere, über den Umfang der Lukenöffnung verteilte, manuell betätigbare Verschiebungseinrichtungen vorgesehen, durch welche die Bewegung des Dichtungsringes der Dichtungsvorrichtung bewirkt wird. Die Verschiebungseinrichtungen weisen eine in Umfangsrichtung keilförmig ansteigende Oberfläche auf, wodurch eine Drehbewegung der Verschiebungseinrichtungen die Verschiebung bewirkt.

Nachteilig bei dieser Ausgestaltung ist allerdings, dass die mehreren Verschiebungseinrichtungen manuell betätigt werden müssen. Es ist somit dem Bediener der Schließvorrichtung nicht möglich, alle Verschiebungsvorrichtungen zugleich zu betätigen. Der Vorgang des dichten Schließens der Luke ist dadurch zeitaufwendig. Dies ist besonders nachteilig, da bei einem Angriff das dichte Schließen der Luke so schnell wie möglich erfolgen muss, damit die Besatzung des Kampffahrzeuges gegen Angriffe beispielsweise mit ABC-Waffen sicher geschützt ist.

Der Erfindung liegt die Aufgabe zu Grunde, eine Dichtungsvorrichtung für eine Ein-Ausstiegsluke mit den im Oberbegriff des Patentanspruchs 1 angegebenen Merkmalen so auszugestalten, dass die Verschiebungseinrichtungen zeitgleich betätigt werden können, damit ein dichtes Schließen der Luke schnell bewirkt wird.

Die Lösung der Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, die Verschiebungseinrichtungen mit einer Kette anzutreiben, wodurch die zeitgleiche Bewegung der Verschiebungseinrichtungen bewirkt wird. Die Verschiebungseinrichtungen, welche in vorteilhafter Weise gleichmäßig entlang des Umfanges der Lukenöffnung verteilt sind, weisen jeweils ein Kettenritzel auf, über welches sie von der Kette angetrieben werden. Die Kette kann entweder manuell über einen drehbares Mittel, wie beispielsweise eine Kurbel, einen Hebel oder einen Drehgriff, oder mittels eines Antriebes, wie beispielsweise einen Elektromotor, angetrieben werden. Wird die Kette angetrieben, so werden auch die Verschiebungseinrichtungen gleichzeitig über die Kettenritzel von der Kette angetrieben, wodurch die Hubbewegung der Dichtungsvorrichtung gleichförmig und über alle Verschiebungseinrichtungen zugleich bewirkt wird.

Die Verschiebungseinrichtungen, welche eine Gewindestange oder einen Vorreiber aufweisen können, werden innerhalb von Durchführungen eines fest am Rand der Lukenöffnung angeordneten Ringes verschiebbar geführt. Die Durchführungen weisen eine mit den Gewinden bzw. Vorreibern zusammenwirkende Struktur, beispielsweise ein Innengewinde, auf, wodurch das Verschieben der Verschiebungseinrichtungen bewirkt werden kann. Durch diese Ausführung wird zudem die gesamte Dichtungsvorrichtung fixiert, es ist keine weitere aufwendige Führung der bewegbaren Teile notwendig.

Damit kein Schmutz in die Trennfuge zwischen den Dichtungsträger und den am Rand der Lukenöffnung angeordneten Ring gelangt, kann diese Trennfuge mit einer ringförmigen, elastischen Dichtplatte, die von dem Dichtungsring getrennt sein und durch angeschraubte Druckstücke gehalten werden kann, dichtend überdeckt werden.

Im folgenden wird anhand der beigefügten Zeichnungen ein Ausführungsbeispiel für eine Dichtungsvorrichtung für Lukendeckel nach der Erfindung näher erläutert.

In den Zeichnungen zeigen:
- Fig. 1: eine Unteransicht der Dichtungsvorrichtung in isometrischer Darstellung;
- Fig. 2: eine Schnittzeichnung, in einer Ebene senkrecht zur Schließebene und radial zur Lukenöffnung, der Ein-Ausstiegsluke mit geschlossenem Lukendeckel, in Öffnungsstellung der Dichtungsvorrichtung;
- Fig. 3: eine Schnittzeichnung analog Fig. 2, in Schließstellung der Dichtungsvorrichtung.

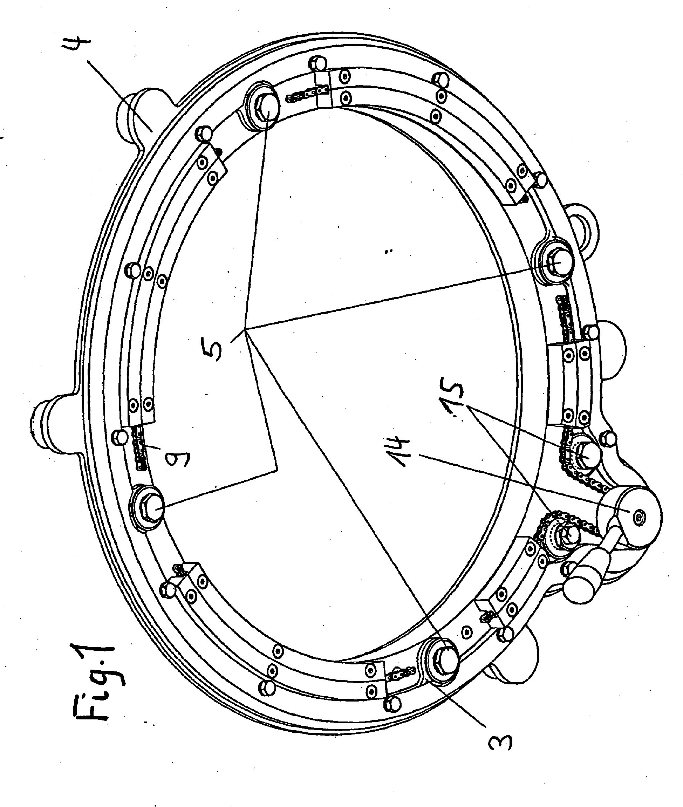

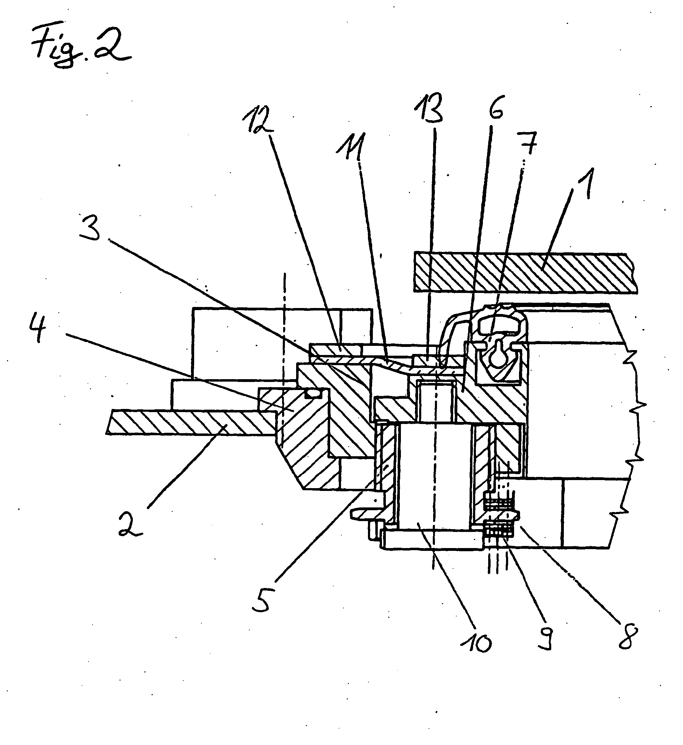

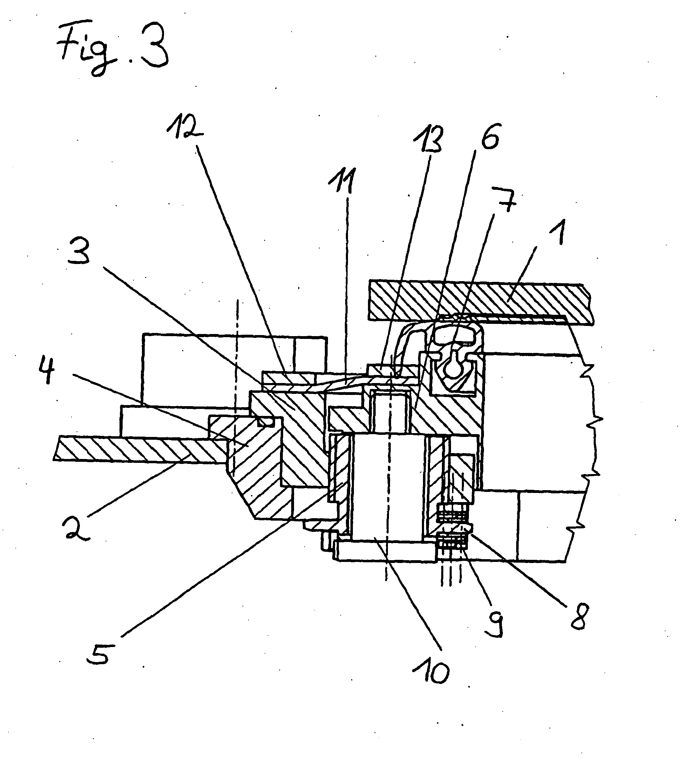

In Fig. 1 ist die Dichtungsvorrichtung für eine Ein-Ausstiegsluke, welche im nicht dargestellten Fahrzeugdach eines Kampfpanzers angeordnet ist, dargestellt. Die Dichtungsvorrichtung ist mittels eines Anschraubflansches 4 fest mit dem Fahrzeugdach verschraubt. An den Anschraubflansch ist ein feststehender Ring 3 angeschraubt. Entlang des Umfanges des Ringes 3 sind vier Durchführungen verteilt, welche jeweils ein Innengewinde aufweisen. In diesen Durchführungen sind Verschiebungseinrichtungen 5 angeordnet, welche ein mit dem Innengewinde zusammenwirkendes Außengewinde aufweisen. Die Verschiebungseinrichtungen 5 weisen zudem jeweils ein in den Fig. 2 und 3 dargestelltes Antriebsrad 8 auf, welches als Kettenritzel ausgeführt ist. Entlang des Umfanges der Dichtungsvorrichtung ist ein umlaufendes Antriebselement 9 geführt, welches in die Antriebsräder 8 der Verschiebungseinrichtungen 5 eingreift. Das Antriebselement 9 ist hierbei als Kette ausgeführt. Das Antriebselement 9 ist, über zwei Umlenkrollen 15 geführt, von einem Hebel 14 manuell betätigbar. Ein manuelles Drehen des Hebels 14 bewirkt somit eine Bewegung des umlaufenden Antriebselements 9, welches eine zeitgleiche Drehbewegung der Antriebsräder 8 und somit auch der Verschiebungseinrichtungen 5 bewirkt. Durch das Zusammenwirken der Außengewinde der Verschiebungseinrichtungen 5 mit den Innengewinden der Durchführungen des feststehenden Ringes 3, wird die Drehbewegung der Verschiebungseinrichtungen 5 in eine Hubbewegung der Verschiebungseinrichtungen 5 umgewandelt.

Die Fig. 2 und 3 zeigen jeweils eine Schnittzeichnung des Randes der Ein-Ausstiegsluke mit geschlossenem Lukendeckel 1, wobei in Fig. 2 die Dichtungsvorrichtung in Öffnungsstellung und Fig. 3 in Schließstellung dargestellt ist.

Die Verschiebungseinrichtung 5 weist ein Aufnahmeelement 10 auf, auf welchem ein Dichtungsträger 6 gelagert ist. Der Dichtungsträger 6 schließlich trägt den Dichtungsring 7, welcher die Abdichtung zum Lukendeckel 1 leistet.

Um die Trennfuge zwischen dem Dichtungsträger 6 und dem am Rand der Lukenöffnung fest angeordneten Ring 3 vor Schmutz zu schützen, wird diese Trennfuge mit einer ringförmigen, elastischen Dichtplatte 11, die von dem Dichtungsring 7 getrennt ist und durch angeschraubte Druckstücke 12, 13 gehalten wird, dichtend überdeckt.

## Patentansprüche

1. Dichtungsvorrichtung für eine Ein-Ausstiegsluke mit einem Lukendekkel (1), der oberhalb des oberen Randes der Lukenöffnung angeordnet ist und zum Öffnen und Schließen parallel zur Schließebene der Luke verschiebbar oder verschwenkbar ist, an einem Kampffahrzeug, insbesondere an einem Kampfpanzer, wobei die Dichtungsvorrichtung im Randbereich der Lukenöffnung angeordnet ist und einen Dichtungsträger (6) aufweist, welcher einen Dichtungsring (7) trägt und in eine Öffnungsstellung soweit absenkbar ist, dass der Lukendeckel (1) unbehindert verschiebbar ist, während er in eine Schließstellung soweit anhebbar ist, dass der Dichtungsring (7) dichtend an der Unterseite des Lukendeckels (1) liegt, und mehrere, über Ihren Umfang verteilte, verdrehbare Verschiebungseinrichtungen zum Verschieben des an einem fest am Rand der Lukenöffnung, angeordneten Ring (3) verschiebbar geführten Dichtungsträger (6) aufweist, **dadurch gekennzeichnet, dass** die Verschiebungseinrichtungen (5) jeweils ein Antriebsrad (8) aufweisen und dass die Verschiebungseinrichtungen (5) gleichzeitig durch die Antriebsräder (8) über ein gemeinsames flexibles Antriebselement (9) angetrieben sind, wodurch die Hubbewegung des Dichtungsträgers gleichförmig und über alle Verschiebungseinrichtungen (5) zugleich bewirkt wird.

2. Dichtungsvorrichtung nach Anspruch 1, **dadurch gekennzeichnet, dass** sie eine ringförmige, elastische Dichtplatte (11) aufweist, die von dem Dichtungsring (7) getrennt ist, und welche, durch ein oder mehrere angeschraubte Druckstücke (12, 13) gehalten, die Trennfuge zwischen dem Dichtungsträger (6) und dem am Rand der Lukenöffnung angeordneten Ring (3) dichtend überdeckt.

3. Dichtungsvorrichtung nach Anspruch 1 oder 2, **dadurch gekennzeichnet, dass** das Antriebselement 9 als Kette und die Antriebsräder 8 als Kettenritzel ausgeführt sind.

4. Dichtungsvorrichtung nach einem der Ansprüche 1 bis 3, **dadurch gekennzeichnet, dass** das Antriebselement (9) durch einen Motor angetrieben wird.

5. Dichtungsvorrichtung nach einem der Ansprüche 1 bis 3, **dadurch gekennzeichnet, dass** das Antriebselement (9) manuell angetrieben wird.

6. Dichtungsvorrichtung nach einem der Ansprüche 1 bis 5, **dadurch gekennzeichnet, dass** der fest am Rand der Lukenöffnung angeordnete Ring (3) Durchführungen mit jeweils einem Innengewinde aufweist, und dass die in den Durchführungen angeordneten Verschiebungseinrichtungen (5) jeweils ein Außengewinde aufweisen.

7. Dichtungsvorrichtung nach einem der Ansprüche 1 bis 5, **dadurch gekennzeichnet, dass** die Verschiebungseinrichtungen (5) jeweils eine Platte aufweisen, die an der dem Ring (3) zugewandten Oberseite eine in Umfangsrichtung keilförmig ansteigende Oberfläche aufweist.

## Claims

1. Sealing device for an entry and exit hatch having a hatch cover (1), which is arranged above the upper edge of the hatch opening and is displaceable or pivotable parallel to the closing plane of the hatch for opening and closing, on a combat vehicle, in particular on a combat tank, the sealing device being arranged in the edge region of the hatch opening and having a seal carrier (6), which carries a sealing ring (7) and can be lowered into an opening position to such an extent that the hatch cover (1) is displaceable without obstruction, whereas it can be lifted into a closing position to such an extent that the sealing ring (7) lies sealingly against the underside of the hatch cover (1), and having a plurality of rotatable displacement devices, distributed over its circumference, for displacing the seal carrier (6), which is displaceably guided on a ring (3) fixedly arranged on the edge of the hatch opening, **characterised in that** the displacement devices (5) each have a drive wheel (8) and **in that** the displacement devices (5) are simultaneously driven by the drive wheels (8) via a common flexible drive element (9), whereby the displacement movement of the seal carrier is effected uniformly and over all displacement devices (5) at the same time.

2. Sealing device according to Claim 1, **characterised in that** it has an annular, elastic sealing plate (11), which is separated from the sealing ring (7) and which, held by one or more screwed-down pressure pieces (12, 13), sealingly covers the joint between the seal carrier (6) and the ring (3) arranged on the edge of the hatch opening.

3. Sealing device according to Claim 1 or 2, **characterised in that** the drive element 9 is embodied as a chain and the drive wheels 8 are embodied as chain pinions.

4. Sealing device according to one of Claims 1 to 3, **characterised in that** the drive element (9) is driven by a motor.

5. Sealing device according to one of Claims 1 to 3, **characterised in that** the drive element (9) is manually driven.

6. Sealing device according to one of Claims 1 to 5, **characterised in that** the ring (3) fixedly arranged on the edge of the hatch opening has leadthroughs, each having an internal thread, and **in that** the displacement devices (5) arranged in the leadthroughs each have an external thread.

7. Sealing device according to one of Claims 1 to 5, **characterised in that** the displacement devices (5) each have a plate which has, on the upper side facing the ring (3), a surface rising in a wedge shape in the circumferential direction.

## Revendications

1. Dispositif d'étanchéité pour une trappe d'accès avec un panneau de fermeture de trappe (1) qui est disposé au-dessus du bord supérieur de l'ouverture de la trappe et peut être déplacé ou pivoté pour l'ouverture et la fermeture parallèlement au plan de fermeture de la trappe, sur un véhicule de combat, notamment sur un char de combat, le dispositif d'étanchéité étant disposé dans la zone de bord de l'ouverture de la trappe et présentant un support de garniture (6) qui porte une bague d'étanchéité (7) et peut être abaissé dans une position d'ouverture jusqu'à ce que le panneau de fermeture de la trappe (1) puisse être déplacé sans obstacle, tandis qu'il peut être relevé dans une position de fermeture jusqu'à ce que la bague d'étanchéité (7) repose de manière étanche sur le dessous du panneau de fermeture de la trappe (1), et présente plusieurs dispositifs de déplacement à rotation, répartis sur sa périphérie pour déplacer le support de garniture (6) guidé de manière mobile sur une bague (3) disposée fixement sur le bord de l'ouverture de la trappe, **caractérisé en ce que** les dispositifs de déplacement (5) présentent chacun une roue d'entraînement (8) et **en ce que** les dispositifs de déplacement (5) sont entraînés simultanément par les roues d'entraînement (8) par le biais d'un élément d'entraînement (9) flexible commun, ce qui provoque la course de déplacement du support de garniture de manière uniforme et à la fois par le biais de tous les dispositifs de déplacement (5).

2. Dispositif d'étanchéité selon la revendication 1, **caractérisé en ce qu'**il présente une plaque d'étanchéité (11) élastique, annulaire qui est séparée de la bague d'étanchéité (7), et qui recouvre de manière étanche, maintenue par un ou plusieurs éléments de pression (12, 13) vissés, le joint de séparation entre le support de garniture (6) et la bague (3) disposée sur le bord de l'ouverture de la trappe.

3. Dispositif d'étanchéité selon la revendication 1 ou 2, **caractérisé en ce que** l'élément d'entraînement (9) est réalisé comme une chaîne et les roues d'entraînement (8) comme des pignons de chaîne.

4. Dispositif d'étanchéité selon l'une quelconque des revendications 1 à 3, **caractérisé en ce que** l'élément d'entraînement (9) est entraîné par un moteur.

5. Dispositif d'étanchéité selon l'une quelconque des revendications 1 à 3, **caractérisé en ce que** l'élément d'entraînement (9) est entraîné manuellement.

6. Dispositif d'étanchéité selon l'une quelconque des revendications 1 à 5, **caractérisé en ce que** la bague (3) disposée fixement sur le bord de l'ouverture de la trappe présente des passages avec un filetage intérieur, et **en ce que** les dispositifs de déplacement (5) disposés dans les passages présentent chacun un filetage extérieur.

7. Dispositif d'étanchéité selon l'une quelconque des revendications 1 à 5, **caractérisé en ce que** les dispositifs de déplacement (5) présentent chacun une plaque qui présente sur le dessus dirigé vers la bague (3) une surface montante cunéiforme dans le sens périphérique.
